# EUROPEAN PATENT SPECIFICATION

(11) **EP 0 518 634 B1**
(45) Date of publication and mention of the grant of the patent: **05.10.1994**
(21) Application number: 92305312.8
(22) Date of filing: 10.06.1992
(51) Int. Cl.: C09D 9/00

(54) **Composition for removing polymeric coatings**
Zusammensetzung zur Entfernung von Polymerüberzügen
Composition pour enlever les revêtements polymères

(30) Priority: 11.06.1991 GB 9112535
(43) Date of publication of application: 16.12.1992
(73) Proprietor: THE DOW CHEMICAL COMPANY, Midland, Michigan 48640 (US)
(72) Inventor: Zwinselman, Jan Johan, CH-8834 Schindellegi (CH)
(74) Representative: Raynor, John

(56) References cited:
- EP-A- 0 407 952
- EP-A- 0 423 635

## Description

Paint-removing compositions, also known as paint strippers, are used to remove dried polymeric coatings, such as films of paint, varnish or shellac from various substrates, such as wood, metal, concrete, cement, brick or glass. Typically the composition is applied to the dried polymeric coating and allowed to remain for a period of time while the composition attacks the coating. After the coating has been loosened, the composition and the loose coating are removed from the substrate by light scraping, wiping and/or washing.

Many of the widely used paint-removing compositions contain methylene chloride because of its ability to efficiently and quickly solvate or dissolve a wide variety of paints, varnishes and shellacs. However, toxicological tests have raised some concern about using methylene chloride in paint-removing compositions. Many other paint-removing compositions contain N-methyl-2-pyrrolidone, which however is not stable in the presence of strongly basic compounds, for example in media having a pH value of more than 10.

British patent specification 876,681 relates to paint-stripping compositions which contain as essential ingredients an alkali compound and a chlorinated phenol. These ingredients may be combined with glycol ethers. The British patent teaches that the glycol ethers have little if any paint-stripping capacity of their own in water solutions and do not seem to be particularly beneficial in alkali solution paint strippers which contain no chlorinated phenol. The disclosed ratios between the ingredients are 4 weight parts of chlorinated phenol, 8 to 400 weight parts of alkali and 1 to 10 weight parts of glycol ether. The chlorinated phenol, alkali compound and glycol ether are dissolved in water in such an amount that the chlorinated phenol, alkali compound and glycol ether together constitute from 3 to 45 weight percent of the total mixture, the remainder being water. However, the use of chlorinated phenols is undesirable due to health problems.

U.S. Patent 4,832,865 discloses a composition for removing dried films of paint, varnish or shellac from substrates. The composition comprises from 30 to 95 weight percent of at least one chlorine-containing organic solvent selected from the group consisting of methylchloroform, trichloroethylene and perchloroethylene and from 1 to 10 weight percent of a non-ionic surfactant selected from certain polyether compounds. The composition may comprise optional materials, such as 0.1 to 10 weight percent soap, 0.1 to 10 weight percent ethyl cellulose, 0.1 to 20 weight percent wax and less than 5, preferably less than 1, weight percent water.

However, since not only methylene chloride but also other chlorinated solvents are said to possibly cause environmental problems, it would be desirable to provide a new composition which is useful for removing polymeric coatings, such as paints, which does not contain a substantial amount of chlorinated solvents.

British patent 285,887 relates to finish or paint removers containing glycols or their mono- or diethers, either alkyl or aryl. Diethylene and triethylene glycols and their monoethyl and monobutyl ethers are mentioned. However, the extended use of ethylene glycol ethers has raised some concern with respect to potential health risks.

U.S. Patent 3,615,827 discloses paint-strapping compositions comprising from 50 to 97 weight percent of an alkali metal hydroxide and from 1 to 10 weight percent of an accelerator composition. The paint-stripping effect of the composition is based on the oxidation of the paint by the alkali metal hydroxide. The accelerator composition is made up of a polyalkylene glycol, such as tripropylene glycol, and ethylene glycol monophenyl ether. However, in the presence of the disclosed large amount of alkali metal hydroxide, the ethylene glycol monophenyl ether is not stable over a longer period of time.

British patent specification 676,926 relates to a method of removing siloxane glaze from a tin surface. The coated surface is contacted with a solution of an alkali metal hydroxide or a quaternary ammonium hydroxide in a liquid glycol ether containing less than 1 percent by weight of water. The glycol ether has the formula RO(R¹O)ₙX wherein R is an alkyl or monocyclic aryl radical, R¹ is an alkylene radical, n has a value of at least 1 and X is an alkyl or monocyclic aryl radical or a hydrogen atom. Monoethers of di- and tripropylene glycol and mono- and diethers of ethylene, diethylene, triethylene and tetraethylene glycols are mentioned. The British patent teaches that it is important that the ether contains less than 1 weight percent water. The siloxane-stripping effect is mainly caused by the presence of the alkali metal hydroxide or the quaternary ammonium hydroxide.

Published European patent application 0,407,952 relates to water-based compositions for stripping coatings and adhesives. They consist of from 40 to 80 weight percent of an aqueous surfactant solution containing one or more thickeners and 20 to 60 weight percent of a solvent mixture. The solvent mixture contains water soluble and water insoluble components. Exemplary of partially water soluble components are ethylene carbonate, ethyl lactate, N-methyl-pyrrolidone or alkylene glycol alkyl ethers, such as monopropylene glycol dialkyl ether or dipropylene glycol dialkyl ether. Exemplary of partially water soluble or water insoluble solvents are esters, ketones, terpenes, aromatic or aliphatic compounds, such as mono- or diacetates of ethylene glycol or propylene glycol. The viscosity of the stripping compositions is between 1000 and 4000 mPa·s. According to the examples these compositions contain a large number of various ingredients. However, the water-based compositions do not readily evaporate and have to be washed off after their use.

Published German Offenlegungsschrift 37 17 600 relates to water-based hand cleansing compositions containing 4 to 20 weight percent of a water-soluble surfactant, 5 to 15 weight percent of a water-insoluble emulsifier, 10 to 20 weight percent of a hydrophilic organic solvent, 0 to 15 weight percent of a lipophilic oxygen-free organic solvent and 30 to 75 weight percent water. The hand cleansing compositions are said to be useful for removing paint, oil grease, tar etc. from hands. Although these compositions may be useful for cleaning hands, they are not sufficiently effective for removing dried paints, varnishes or shellacs from various substrates.

Published European patent application 0,423,635 relates to a composition for removing lacquers from metals. The compositions consist of at least one fully etherified multifunctional alcohol in combination with strongly inorganic and/or organic bases or weak acids as well as solubilizing additives. Exemplary of fully etherified multifunctional alcohols are polyalkylene glycol diethers, such as polyethylene glycol dimethyl or dibutyl ethers. Exemplary of solubilizers are polyalkylene glycols and/or their monoethers, polyvinyl alcohols, benzoates, aliphatic and/or aromatic alcohols or tensides etc. Although these compositions based on organic compounds appear to be quite efficient for removing lacquers from metals because of the bases or acids contained therein, it would be desirable to find other ways of improving the efficiency of compositions based on organic solvents for removing polymeric coatings.

Accordingly, it would be desirable to provide a new composition which is useful for removing polymeric coatings from substrates. It would be particularly desirable to provide a new composition which removes such coatings within a relatively short time period and which is free of a substantial amount of chlorinated solvents. It would also be desirable to provide a new composition which can be formulated in such a manner that it is stable in the presence of a basic compound and, preferably, also in the presence of an acidic compound.

A composition has been found which is useful for removing polymeric coatings, such as films of paint, varnish or shellac, from various substrates, such as wood, metal, concrete, cement, brick or glass. The composition is useful for removing such coatings from the substrates within a relatively short time period, even if the coating is dry.

Accordingly, one aspect of the present invention is a composition which comprises
(A) from 10 to 99 weight percent of a propylene or butylene glycol diether of formula I

   R¹O - (CH₂ - CHR³O)ₙ - R² (I)

   wherein
   R¹ and R² independently are a C₁₋₁₂-alkyl group,
   R³ in each occurrence independently is methyl or ethyl and
   n is from 1 to 4,
(B) from 90 to 0 weight percent of an organic protic solvent and
(C) from 30 to 1 weight percent of water,
based on the total weight of (A), (B) and (C), and which composition is free of a substantial amount of chlorinated solvents.

Another aspect of the present invention is the use of from 10 to 99 weight percent of such a glycol diether in the preparation of a composition for removing polymeric coatings.

A further aspect of the invention provides a method of removing a polymeric coating, such as a film of paint, varnish or shellac, from an article by contacting the polymeric coating with the composition of the present invention.

Surprisingly, it has been found that the efficiency of removing (stripping) polymeric compounds by diethers of formula I can be substantially increased when these diethers are mixed with water at an amount indicated above.

The composition of the present invention is free of a substantial amount of chlorinated solvents. By "free of a substantial amount" is meant that the composition contains less than 5 percent, preferably less than 2 percent and more preferably less than 0.1 percent of a chlorinated solvent. Most preferably, the composition of the present invention does not contain a chlorinated solvent.

The composition comprises (A) from 10 to 99, preferably from 25 to 95 and more preferably from 50 to 90 weight percent of a propylene or butylene glycol diether of formula I, (B) from 90 to 0, preferably from 70 to 0 and more preferably from 40 to 0 weight percent of an organic protic solvent, and (C) from 30 to 1, preferably from 15 to 1, more preferably from 15 to 3 and most preferably from 15 to 5 weight percent of water, the percentages being based on the total weight of (A), (B) and (C).

The propylene and butylene glycol diethers are represented by formula I

R¹O - (CH₂ - CHR³O)ₙ - R² (I).

In formula I R¹ and R² independently are an alkyl group having from 1 to 12, preferably from 1 to 6, more preferably from 1 to 4 carbon atoms. The alkyl group may be branched or unbranched. Exemplary of the alkyl groups are methyl, ethyl, n-propyl, isopropyl, the butyl groups, such as n-butyl or isobutyl, and the pentyl, hexyl, octyl, decyl or dodecyl groups. Of the propyl and butyl groups n-propyl and n-butyl are preferred. Preferably, R¹ and R² independently are methyl or n-butyl. The most preferred diethers of formula I are those wherein i) R¹ is methyl and R² is methyl or n-butyl or ii) R¹ is n-butyl and R² is methyl.

R³ in each occurrence independently is methyl or ethyl. Preferably, R³ has the same meaning in all occurrences. Most preferably, R³ in each occurrence is methyl.

n is from 1 to 4, preferably 1, 2 or 3.
Preferred examples of the diethers of formula I are dipropylene glycol dimethyl ether, dipropylene glycol methyl n-butyl ether and propylene glycol methyl n-butyl ether.

The composition may comprise an organic protic solvent in an amount indicated above. Useful organic protic solvents are for example alcohols, such as saturated open-chain or cyclic alcohols, preferably methanol, ethanol, the propanols, such as n-propanol or isopropanol, the butanols, such as n-butanol or i-butanol, the hexanols, such as n-hexanol or cyclohexanol, the heptanols, octanols, decanols, dodecanols, such as lauryl alcohol, or the octadecanols, such as stearyl alcohol; or unsaturated alcohols, preferably the allyl or furfuryl alcohol. The alcohol preferably has 1 to 8 carbon atoms. Other useful alcohols are glycols or glycol monoethers, preferably the propylene or butylene glycols or glycol monoethers, such as propylene glycol, dipropylene glycol, butylene glycol, dibutylene glycol, propylene glycol methyl ether, propylene glycol n-butyl ether, dipropylene glycol methyl ether or dipropylene glycol n-butyl ether. Other useful protic organic solvents are substituted or non-substituted phenols, such as the phenol or the methyl phenols. The more preferred organic protic solvents are ethanol and methanol. Blends of different organic protic solvents are also useful, however their total amount must be within the range indicated above for component (B) of the composition of the present invention.

The composition of the present invention contains water and, optionally, an organic protic solvent in an amount indicated above. It is not necessary that the composition of the present invention contains an organic protic solvent, however, the total amount of components (B) and (C) is from 1 to 90 percent, preferably from 5 to 75 percent and more preferably from 10 to 50 percent, based on the total weight of (A), (B) and (C).

The composition of the present invention may also comprise a basic or acidic compound. When a basic or acidic compound is used, it is ordinarily used in an amount of from 0.1 to 45, preferably of from 0.2 to 20, more preferably of from 0.3 to 15 weight percent, based on the total amount of (A) and (B). Useful basic compounds are for example alkali metal hydroxides, such as sodium or potassium hydroxide, alkali metal carbonates, alkali metal silicates or alkali metal phosphonates. Sodium and potassium are the preferred alkali metal ions. Other useful basic compounds are amines, such as ammonia, ethylene diamine, hexamethylene tetramine, alkanol amines, such as ethanol amine or propanol amine. Useful acidic compounds are for example organic acids, such as formic acid, acetic acid, propionic acid, butanoic acid or pentanoic acid; or inorganic acids, such as sulphuric acid, hydrochloric acid or nitric acid.

Trials have shown that the propylene and butylene glycol diethers of formula (I) which are used as component (A) of the composition of the present invention are not attacked or decomposed by a basic or acidic compound. This is very advantageous since basic or acidic compounds can be used in order to further increase the efficiency of the composition of the present invention for removing polymeric coatings from substrates. When a basic or acidic compound is used, either no organic protic solvent is used in the composition of the present invention or an organic protic solvent is selected as component (B) of the composition which is not attacked or decomposed by a basic or acidic compound, such as ethanol or methanol. The skilled artisan knows which of the organic protic solvents are stable in the presence of a basic or acidic compound. Accordingly, the composition of the present invention can be conveniently formulated in such a manner that it is stable in the presence of a basic or acidic compound.

The composition of the present invention may contain known, optional additives, such as surfactants or wetting agents of the anionic, non-ionic or cationic types, provided that they are soluble and effective in the composition of the present invention and do not influence components (A) and (B) of the composition in an undesirable manner. When a surfactant or wetting agent is used, it is ordinarily used in an amount of from 0.01 to 10, preferably of from 0.05 to 5, more preferably of from 0.1 to 3 weight percent, based on the total amount of (A) and (B). Useful surfactants and wetting agents are for example nonyl phenol ethoxylates or fatty alcohol ethoxylates. Other optional additives are for example gelling agents to retard the flow of the composition, such as hydroxypropyl methyl cellulose ethers, methyl cellulose ethers or paraffin wax. Further optional additives are esters, such as propylene glycol methyl ether acetate, propylene glycol butyl ether acetate or acetates of alkyl alcohols, such as butyl acetate or pentyl acetate, or acetates of dicarboxylic acids, such as acetates of oxalic acid, malonic acid, succinic acid, glutaric acid or adipic acid.

The composition of the present invention is usually prepared by mixing the various ingredients. Typically the ingredients are mixed at room temperature but the mixture may be heated, for example up to 60°C.

The composition of the present invention is useful to remove dried coatings, such as films, of paint, varnish or shellac from various substrates, such as wood, metal, concrete, cement, brick or glass. The paints, varnishes or shellacs are typically formulated from diverse components, such as known epoxy resins, acrylic resins, vinyl resins, such as polyvinyl acetate, alkyd resins, polyester resins or polyurethanes. The composition of the present invention is particularly useful in photoindustrial applications for removing or stripping photosensitive dry films or photosensitive lacquers which are commonly used in the photoindustry. For example, the composition of the present invention is useful for removing at least portions of photosensitive coatings or lacquers after exposure to radiation.

In using the composition of the present invention to remove one or more layers of paint, varnish or shellac from articles, the composition is applied to the surface of the article and allowed to remain in contact with the surface of the article for a period of time which is sufficient to effect substantial loosening of the layer(s) on the surface. The composition may be applied to the surface of the article by conventional means, such as coating, brushing, pouring, spraying or dipping. The thickness of the applied composition generally is in the range of from 0.1 to 5 mm, preferably of from 0.2 to 2 mm. The temperature of the composition of the present invention when it is applied to the surface of the article is not critical. Generally, ambient temperature is convenient, but the temperature of the composition can be lower or higher. The period of time during which the composition is allowed to remain in contact with the surface of the article naturally depends on many factors, such as the nature, thickness and age of paint, varnish or shellac coating to be removed from the surface of the article, the porosity of the surface of the article, the degree of bonding between the surface of the article and the coating, temperature, humidity, etc. Generally, at ambient temperature a period of time of up to about 120 minutes is sufficient to effect substantial loosening of the layer(s) on the surface if the paint, varnish or shellac has not been dried for more than a couple of weeks. In many cases a period of a few seconds up to about 60 minutes, often only up to about 30 minutes, is sufficient. If the paint, varnish or shellac has been dried for a very long time period, for example for several years, or if the number of layers is excessively large, generally a longer time period is necessary to effect substantial loosening of the layer(s) on the surface.

After the composition has been allowed to remain in contact with the surface of the article to loosen the coating or as much of it as is desired, the composition and the loose coating are removed in a known manner, for example by wiping, washing or spraying with water or an organic solvent or by light scraping with a putty knife or brushing. Generally the composition of the present invention evaporates and does not need to be washed off.

One treatment with the composition of the present invention is ordinarily sufficient to loosen and remove most paint, varnish and shellac coatings. Occasionally, a sequence of two or more treatments may be used. After drying, the article may, if desired, be further treated, for example by sanding or sandblasting.

The invention is further illustrated by the following examples. All parts and percentages are by weight unless otherwise mentioned. The examples should not be construed to limit the scope of the present invention.

### Preparation and stripping of a polymeric coating in the Experiments listed in Tables I, II and III

Metallic plates made of tin of 0.3 mm thickness are cleaned with acetone and 1,1,1-trichloroethane. A commercially available paint made of an alkyd resin, polyester resin, epoxy resin, acrylic resin or polyvinyl acetate or a polyurethane coating composition is thoroughly stirred and then applied to the metallic plate with a brush. The plates are then placed in an oven and dried during a period of 48 hours at 50°C. After drying, a small amount of the composition of the present invention or of a comparative solvent (composition) is applied to the dried coating at room temperature and a timer is started. The timer is stopped as soon as the coating becomes rippled or when bubbles are observed at the surface of the coating. If no physical change in the coating is observed, the timer is stopped when the coating is soft enough to be peeled off by means of a putty knife. All cases where no physical change is observed but the coating can be peeled off are indicated by "+" in the following Tables. The time in seconds when the timer is stopped is listed in Tables I, II and III below. "x" means that the applied composition of the present invention or the applied comparative solvent (composition) does not have an effect. "-" means that no experiment has been made.

Table I below illustrates that a propylene glycol diether is substantially more efficient for stripping paint when it is mixed with the claimed amount of water than when it is used alone or with a higher than claimed amount. Table I also illustrates that a propylene glycol diether is equally or more efficient for stripping paint when it is mixed with water than when it is mixed with a corresponding amount of protic solvent. For environmental and economical reasons it is preferred to use water when the same or even better performance can be achieved than when using a protic solvent.

**TABLE I**

| resin type | epoxy | acrylic | polyvinyl acetate | alkyd | polyester | polyurethane |
|---|---|---|---|---|---|---|
| DMM/water ¹⁾ 85 / 15 wt.% (Example) | 45-60⁺ | 20 | 30-35 | 25 | 11 | >180⁺ (sec.) |
| DMM/water* 60 / 40 wt.% | 60-80⁺ | 25 | 70 | 40-45 | 11 | >300⁺ |
| DMM/DPG ²⁾* 85 / 15 wt.% | 60 | 25 | 50 | 90 | 25 | x |
| DMM/1-octanol* 80 / 20 wt.% | 60 | 40 | 65 | 40 | 5-10 | x |
| DMM/methanol* 85/ 15 wt.% | 65-90⁺ | 20 | 30 | 15-20 | 15-20 | >180⁺ |
| DMM* | x | 25-30 | >120 | 40-45 | 30 | >180⁺ |
| DMM/IPG³⁾ 85/15 wt.% | - | - | 30 | 15 | 15 | - |

| | | | | | | |
|---|---|---|---|---|---|---|
| * not an example of the invention (but generally not prior art) | | | | | | |
| 1) DMM: dipropylene glycol dimethyl ether | | | | | | |
| 2) DPG: dipropylene glycol | | | | | | |
| 3) IPG: polyglycol, industrial grade (average molecular weight 1200) | | | | | | |
| ⁺ no bubbles or ripples but coating can be mechanically peeled | | | | | | |

In Table II below two paint-stripping compositions within the scope of the present invention are compared with various solvents or solvent compositions which are not within the scope of the present invention but which are not necessarily known in the art as paint strippers.

**TABLE II**

| resin type | polyvinyl acetate | alkyd | polyester | acrylic |
|---|---|---|---|---|
| DMM/water ¹⁾ 85 / 15 wt.% | 35 | 25 | 11 | 20 (sec) |
| DMM* | >120 | 45 | 30 | 30 |
| MBM/water ²⁾ 99 / 1 wt.% | 15 | 45 | 8 | 10 |
| MBM* | 15 | 45 | 8 | 10 |
| NMP/water* ³⁾ 85 / 15 wt.% | 90 | 160 | 50 | - |
| NMP* | 30 | 30 | 10 | 40 |

| | | | | |
|---|---|---|---|---|
| *) not an example of the invention | | | | |
| 1) DMM: dipropylene glycol dimethyl ether | | | | |
| 2) MBM: 1,2-dimethoxy butane (butylene glycol dimethyl ether) | | | | |
| 3) NMP: N-methyl-2-pyrrolidone | | | | |

Table II illustrates that propylene glycol diethers are more efficient for stripping paints when they are mixed with water. However, when N-methyl-2-pyrrolidone, which is a known compound for stripping paints, is mixed with the same amount of water, this mixture is less efficient as a paint stripper than N-methyl-2-pyrrolidone alone. Pure butylene glycol dimethyl ether is an excellent paint stripper, therefore the addition of water does not substantially further improve its paint-stripping efficiency.

The efficiency of several compositions with different amounts of water is listed in Table III below. Table III illustrates that the paint-stripping efficiency of an alkylene glycol diether is decreased if a) it is not mixed with water or b) if it is mixed with too much water.

**TABLE III**

| | alkyd resin | polyester resin |
|---|---|---|
| DMM* | 40 | 10 (sec.) |
| DMM/water ¹⁾ 99 / 1 wt.% | 20 | 5 |
| DMM/water 95 / 5 wt.% | 25 | 4 |
| DMM/water* 60 / 40 wt.% | 40 - 45 | 11 |
| DMM/water* 40 / 60 wt.% | 35-45 | 10 |

| | | |
|---|---|---|
| 1) DMM: dipropylene glycol dimethyl ether | | |
| * not an example of the invention | | |

### Paint-stripping in the Experiments listed in Tables IV and V

Various compositions of the present invention or comparative solvents are used for treating an alkyd resin-based paint, a melamine resin-based paint and a polyester-based paint which have been applied to thin metallic plates and which have been dried at room temperature over a period of two months. A small amount of the composition of the present invention or of a comparative solvent is applied to the dried paint and a timer is started. The timer is stopped as soon as the coating becomes rippled or when bubbles are observed at the surface of the coating. The time in minutes when the timer is stopped is listed in Tables IV and V below. "x" means that the applied comparative solvent does not have an effect.

In Table IV below a paint-stripping composition containing DMM and water is compared with undiluted DMM and with water. For comparison, the paint-stripping efficiency of a propylene glycol methyl ether acetate/water blend (not prior art but not within the scope of the invention) is compared wish propylene glycol methyl ether acetate alone and water alone.

**TABLE IV**

| | alkyd resin | polyester resin |
|---|---|---|
| DMM/water ¹⁾ 85 / 15 wt.% | 16 | 100 (min.) |
| DMM* | 21 | 120 |
| PMA* ²⁾ | 24 | 120 |
| water* | x | x |
| PMA/water* 85 / 15 wt.% | 25 | 120 |

| | | |
|---|---|---|
| *) not an example of the invention | | |
| 1) DMM: dipropylene glycol dimethyl ether | | |
| 2) PMA: propylene glycol methyl ether acetate | | |

Table IV illustrates that the dipropylene glycol dimethyl ether is more efficient for stripping paints when it is mixed with water, although water alone is not useful for stripping paints. However, when propylene glycol methyl ether acetate is mixed with water, no significant effect on its paint-stripping efficiency can be observed.

In Table V below the effect of several compositions of the present invention on paints, based on a polyester, melamine resin and an alkyd resin is listed.

Composition 1:12 parts of propylene glycol methyl ether, 23 parts of dipropylene glycol methyl ether, 29 parts of normal white spirit, 15 parts of a blend of acetates of various dicarboxylic acids, 1 part of formic acid, 3 parts of a surfactant, commercially available from The Dow Chemical Company as 9N6 DOWFAX™ surfactant, 2 parts of a hydroxypropyl methyl cellulose ether, commercially available from The Dow Chemical Company as Methocel 311 cellulose ether, 12.75 parts of dipropylene glycol dimethyl ether and 2.25 parts of water.

Composition 2:28 parts of a blend of 70 percent diisopropyl benzene and 30 percent hexyl benzene, 20 parts of dipropylene glycol n-butyl ether, 2 parts of formic acid, 3 parts of a surfactant, commercially available from The Dow Chemical Company as 9N6 DOWFAX™ surfactant, 40 parts of dipropylene glycol dimethyl ether and 7 parts of water.

Composition 3:20 parts of a blend of 70 percent diisopropyl benzene and 30 percent hexyl benzene, 20 parts of dipropylene glycol n-butyl ether, 2 parts of formic acid, 3 parts of a surfactant, commercially available from The Dow Chemical Company as 9N6 DOWFAX™ surfactant, 15 parts of propylene glycol methyl ether acetate, 34 parts of dipropylene glycol dimethyl ether and 6 parts of water.

**TABLE V**

| resin type | polyester | melamine | alkyd |
|---|---|---|---|
| composition 1 | 1.5 | 2.5 | 23 (min.) |
| composition 2 | 2 | 4 | 25 |
| composition 3 | 2.5 | 1.5 | 23 |

## Claims

1. A composition, useful for removing polymeric coatings, which comprises
(A) from 10 to 99 weight percent of a propylene or butylene glycol diether of formula I
R¹O - (CH₂ - CHR³O)ₙ - R² (I)
wherein
R¹ and R² independently are a C₁₋₁₂-alkyl group,
R³ in each occurrence independently is methyl or ethyl and
n is from 1 to 4,
(B) from 90 to 0 weight percent of an organic protic solvent and
(C) from 30 to 1 weight percent of water,
based on the total weight of (A), (B) and (C) and which composition is free of a substantial amount of chlorinated solvents.

2. The composition of Claim 1 wherein the organic protic solvent is an alcohol having from 1 to 8 carbon atoms.

3. The composition of Claim 1 or Claim 2 wherein R¹ and R² in formula I independently are a C₁₋₄-alkyl group.

4. The composition of Claim 1 or Claim 2 wherein R¹ and R² in formula I independently are methyl or n-butyl.

5. The composition of any one of Claims 1 to 4 comprising (A) from 25 to 95 weight percent of a propylene or butylene glycol diether of formula I, (B) from 70 to 0 weight percent of an organic protic solvent and (C) from 15 to 1 weight percent of water.

6. The composition of Claim 5 comprising (A) from 50 to 90 weight percent of a propylene or butylene glycol diether of formula I, (B) from 40 to 0 weight percent of an organic protic solvent and (C) from 15 to 3 weight percent of water.

7. The composition of any one of Claims 1 to 6 comprising additionally a basic or acidic compound.

8. The composition of Claim 7 comprising the basic or acidic compound at an amount of from 0.1 to 45 percent, based on the total weight of (A) and (B).

9. A method of removing a polymeric coating from an article by contacting the polymeric coating with the composition of any one of Claims 1 to 8.

10. The use in the preparation of a composition for removing polymeric coatings, which composition is free of substantial amounts of chlorinated solvents, of
(A) from 10 to 99 weight percent (based on the composition) of a glycol diether as defined in claim 1,
(B) from 90 to 0 weight percent of an organic protic solvent, and
(C) from 30 to 1 weight percent water.

## Patentansprüche

1. Zusammensetzung, die zur Entfernung von polymeren Überzügen geeignet ist, enthaltend
(A) 10 bis 99 Gew.-% eines Propylen- oder Butylenglycoldiethers der Formel I
R¹O - (CH₂ - CHR³O)ₙ - R² (I),
worin
R¹ und R² unabhängig voneinander eine C₁₋₁₂-Alkylgruppe, R³ jedesmal unabhängig Methyl oder Ethyl und
n 1 bis 4 bedeutet,
(B) 90 bis 0 Gew.-% eines organischen protischen Lösungsmittels und
(C) 30 bis 1 Gew.-% Wasser,
bezogen aus das Gesamtgewicht von (A), (B) und (C), wobei die Zusammensetzung keine substantielle Menge eines chlorierten Lösungsmittls enthält.

2. Zusammensetzung nach Anspruch 1, worin das organische protische Lösungmittel ein Alkohol mit 1 bis 8 Kohlenstoffatomen ist.

3. Zusammensetzung nach Anspruch 1 oder Anspruch 2, worin R¹ und R² in Formel I unabhängig eine C₁₋₄-Alkylgruppe ist.

4. Zusammensetzung nach Anspruch 1 oder Anspruch 2, worin R¹ und R² in Formel I unabhängig Methyl oder n-Butyl ist.

5. Zusammensetzung nach einem der vorangehenden Ansprüche, enthaltend (A) 25 bis 95 Gew.-% eines Propylen- oder Butylenglycoldiethers der Formel I, (B) 70 bis 0 Gew.-% eines organischen protischen Lösungsmittels und (C) 15 bis 1 Gew.-% Wasser.

6. Zusammensetzung nach Anspruch 5, enthaltend (A) 50 bis 90 Gew.-% eines Propylen- oder Butylenglycoldiethers der Formel I, (B) 40 bis 0 Gew.-% eines organischen protischen Lösungsmittels und (C) 15 bis 3 Gew.-% Wasser.

7. Zusammensetzung nach einem der vorangehenden AnSprüche, enthaltend zusätzlich eine basische oder saure Verbindung.

8. Zusammensetzung nach Anspruch 7, enthaltend 0,1 bis 45 %, bezogen auf das Gesamtgewicht von (A) und (B) der basischen oder sauren Verbindung.

9. Verfahren zur Entfernung eines polymeren Überzuges von einem Gegenstand durch in-Berührung-bringen des polymeren Überzuges mit der Zusammensetzung nach einem der vorangehenden Ansprüche.

10. Verwendung zur Herstellung einer Zusammensetzung zur Entfernung von polymeren Überzügen, wobei die Zusammensetzung keine substantielle Mengen eines chlorierten Lösungsmittel enthält, von
(A) 10 bis 99 Gew.-% (bezogen auf die Zusammensetzung) eines Glycoldiethers gemäss Anspruch 1,
(B) 90 bis 0 Gew.-% eines organischen protischen Lösungsmittels und
(C) 30 bis 1 Gew.-% Wasser.

## Revendications

1. Composition utile pour l'élimination de revêtements polymères, qui comprend :
(A) de 10 à 99% en poids d'un diéther de propylèneglycol ou de butylèneglycol, de formule I :
R¹O - (CH₂ - CHR³O)ₙ - R² (I)
dans laquelle :
R¹ et R² représentent chacun, indépendamment, un groupe alkyle en C₁ à C₁₂,
R³ représente à chaque occurrence, indépendamment, un groupe méthyle ou éthyle, et
n représente un nombre de 1 à 4,
(B) de 90 à 0% en poids d'un solvant protique organique, et
(C) de 30 à 1% en poids d'eau,
les pourcentages étant basés sur le poids total de (A), (B) et (C) et ladite composition étant exempte de quantités importantes de solvants chlorés.

2. Composition selon la revendication 1, dans laquelle le solvant protique organique est un alcool ayant de 1 à 8 atomes de carbone.

3. Composition selon la revendication 1 ou 2, pour laquelle, dans la formule I, R¹ et R² représentent chacun, indépendamment, un groupe alkyle en C₁ à C₄.

4. Composition selon la revendication 1 ou 2, pour laquelle, dans la formule I, R¹ et R² représentent chacun, indépendamment, un groupe méthyle ou n-butyle.

5. Composition selon l'une quelconque des revendications 1 à 4, comprenant (A) de 25 à 95% en poids d'un diéther de propylèneglycol ou de butylèneglycol de formule I, (B) de 70 à 0% en poids d'un solvant protique organique et (C) de 15 à 1% en poids d'eau.

6. Composition selon la revendication 5, comprenant (A) de 50 à 90% en poids d'un diéther de propylèneglycol ou de butylèneglycol de formule I, (B) de 40 à 0% en poids d'un solvant protique organique et (C) de 15 à 3% en poids d'eau.

7. Composition selon l'une quelconque des revendications 1 à 6 comprenant en outre un composé acide ou basique.

8. Composition selon la revendication 7, comprenant le composé acide ou basique en une proportion de 0,1 à 45%, par rapport au poids total de (A) et (B).

9. Procédé d'élimination d'un revêtement polymère d'un article par mise du revêtement polymère en contact avec la composition selon l'une quelconque des revendications 1 à 8.

10. Utilisation dans la préparation d'une composition pour l'élimination de revêtements polymères, qui est exempte de quantités importantes de solvants chlorés, de :
(A) 10 à 99% en poids (par rapport à la composition) d'un diéther de glycol tel que défini dans la revendication 1,
(B) 90 à 0% en poids d'un solvant protique organique, et
(C) 30 à 1% en poids d'eau.
